# EUROPEAN PATENT SPECIFICATION

(11) **EP 0 960 863 B1**
(45) Date of publication and mention of the grant of the patent: **05.11.2003**
(21) Application number: 99201595.8
(22) Date of filing: 20.05.1999
(51) Int. Cl.: C03B 35/04, C03B 29/06, C03B 25/06

(54) **Furnace for the continuous heat treatment of glass containers**
Ofen zur kontinuierlichen Wärmebehandlung von Glascontainern
Four pour le traitement à chaud continu de containeurs en verre

(30) Priority: 25.05.1998 IT MI980373
(43) Date of publication of application: 01.12.1999
(73) Proprietor: Euromatic s.r.l., 24047 Treviglio (IT)
(72) Inventor: Vaporesi, Donino, 24047 Treviglio, Bergamo (IT)
(74) Representative: De Gregori, Antonella

(56) References cited:
- DE-A- 2 100 042

## Description

The present invention relates to a furnace for the continuous heat treatment of glass containers.

Furnaces for the continuous heat treatment of glass containers, provided with conveyor belts on which the containers, resting on their base, are fed forwards together, are already known.

This type of conveying system, however, is not very suitable for small-diameter containers such as phials, small bottles, etc., since the greater height compared to the base results in poor stability of said containers.

Moreover, because of the random position of the containers, subsequent automatic handling thereof is made very difficult.

It has also been thought to perform feeding on broad hinged chains, but this has resulted in problems associated with heating and cooling of the chains and in wastage of energy. Moreover, the chains themselves are subject to expansion resulting in displacement of the containers and are unsuitable for automatic treatment of said containers.

The object of the present invention is therefore that of providing a furnace for the continuous heat treatment of glass containers which solves the abovementioned problems, having a structure which is simple and can be adapted to the various shapes of the containers.

Another object is that of providing a furnace with which it is possible to maintain the position which the containers assume at the start of treatment so that automatic handling may be performed.

Yet another object of the present invention is that of providing a furnace which is also able to .perform, without' problems, the heat treatment of containers provided with printed or silk-screen printed writing.

These objects according to the present invention are achieved by providing a furnace for the continuous heat treatment of glass containers according to claim 1.

The characteristic features and advantages of a furnace for the continuous heat treatment of glass containers according to the present invention will emerge more clearly from the following description provided by way of a non-limiting example with reference to the accompanying schematic drawings, in which:
Figure 1 is a side elevation view of a furnace for the continuous heat treatment of glass containers according to the present invention;
Figure 2 is a front elevation view, on a larger scale, of a detail of the drive system of the furnace according to the invention;
Figure 3 is a top plan view of a section of the elements for conveying the containers inside the furnace, as shown in Figure 2;
Figure 4 is a side view, on a larger scale, in the direction of the arrow F in Figure 3;
Figure 5 is a side view of an enlarged detail shown in Figure 4;
Figures 6 and 7 show a front elevation view and a top plan view of a detail of a furnace according to the present invention with a first type of container;
Figures 8 and 9 show a front elevation view and a top plan view of a detail of a furnace according to the invention with a second type of container; and
Figures 10 and 11 show a front elevation view and a top plan view of a detail of a furnace according to the invention with a third type of container.

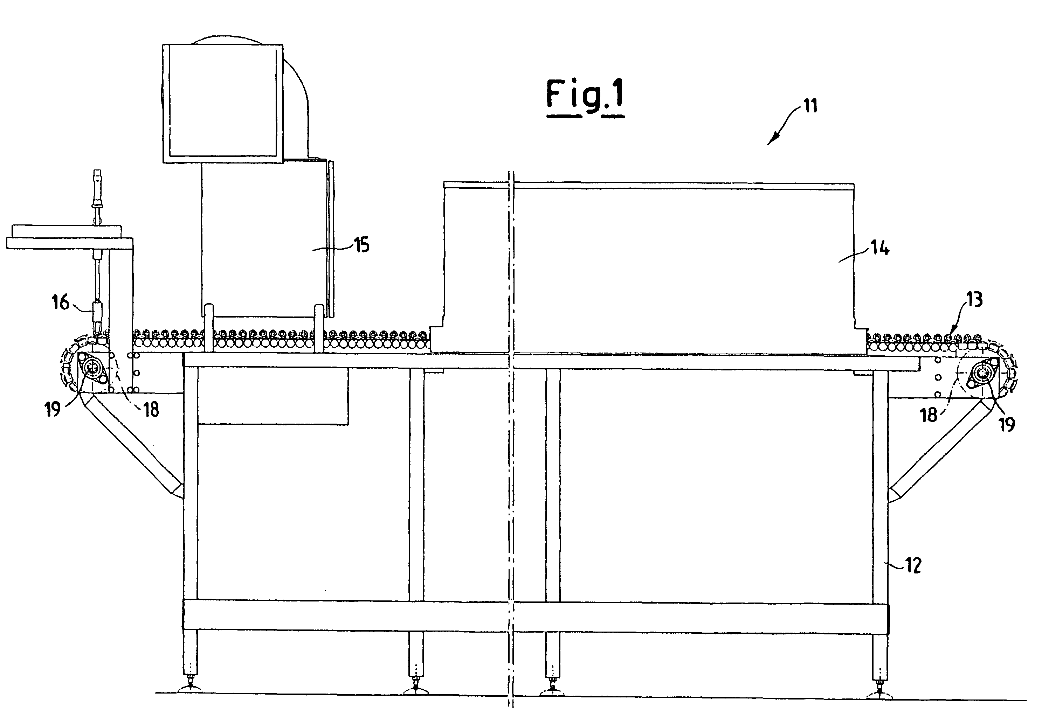

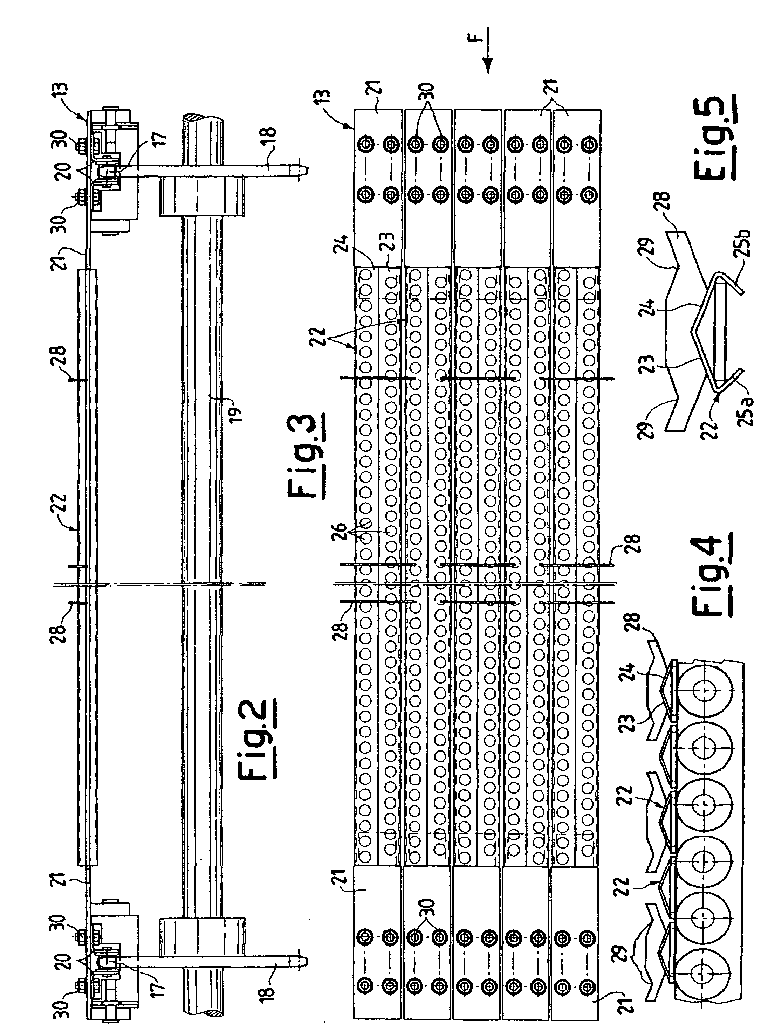

With reference to Figures 1-5, said figures show a furnace for the continuous heat treatment of containers according to the present invention, which is indicated in its entirety by 11 and inside which containers of various shapes, preferably made of glass, are treated.

The furnace 11 has a structure 12 on top of which, by means of a conveyor, indicated in its entirety by 13, containers are fed through a first hot zone 14 and then a second ventilated zone 15, before being unloaded by means of a handling device 16.

The conveyor 13 comprises a pair of lateral chains 17 on opposite sides which are wound in an endless loop onto toothed end pulleys 18 so as to define an upper conveying section and a lower return section. The pulleys 18 are located on opposite sides of shafts 19 and the links of the chains 17 have a plurality of supports 20 for fixing (for example by means of bolts 30) flat brackets 21 which are arranged so as to project in a cantilevered manner from the chain 17 on which they are located and are directed inwards towards the other parallel and adjacent chain 17.

These brackets 21 have, mounted on them, cross-pieces 22 which are formed by means of shaped profiles with a triangular cross-section, which have two inclined sides 23 and 24 located on top and a third side 25a and 25b located underneath the brackets 21. The third side 25a, 25b, located underneath the brackets 21 is centrally open and separated into two portions which are integral with the respective upper sides 23, 24. The two portions 25a and 25b are inclined with respect to the brackets and converge at their free ends so that positioning by means of engagement onto the brackets 21 may be performed.

In this way the cross-pieces 22 are able to slide partially on the brackets 21, transversely with respect to the furnace, upon variation in the temperature, without causing particular problems. The deformations are also limited since the two inclined sides 23 and 24 of the cross-pieces, located on top, are provided with a series of weight-reducing holes 26 which favour the passage of the heat. Should the cross-pieces be attached to the brackets, the latter may be positioned by means of eyelets with respect to the supports 20 so as to be able to achieve in any case translatability of one with respect to the other, without disengagement. Precisely within these two upper sides 23 and 24, the cross-pieces 22 also have recesses (not shown) inside which flat supports 28 are inserted and positioned. These supports 28, which are fin-shaped, are thus positioned perpendicularly with respect to the conveying plane and have an upper shape projecting laterally with respect to the profile of the cross-pieces 22 and designed to define seats 29 for receiving an end part of a container. The other end part is seated instead between two successive cross-pieces 22 in the hollow formed between two upper sides 23 and 24 of adjacent cross-pieces.

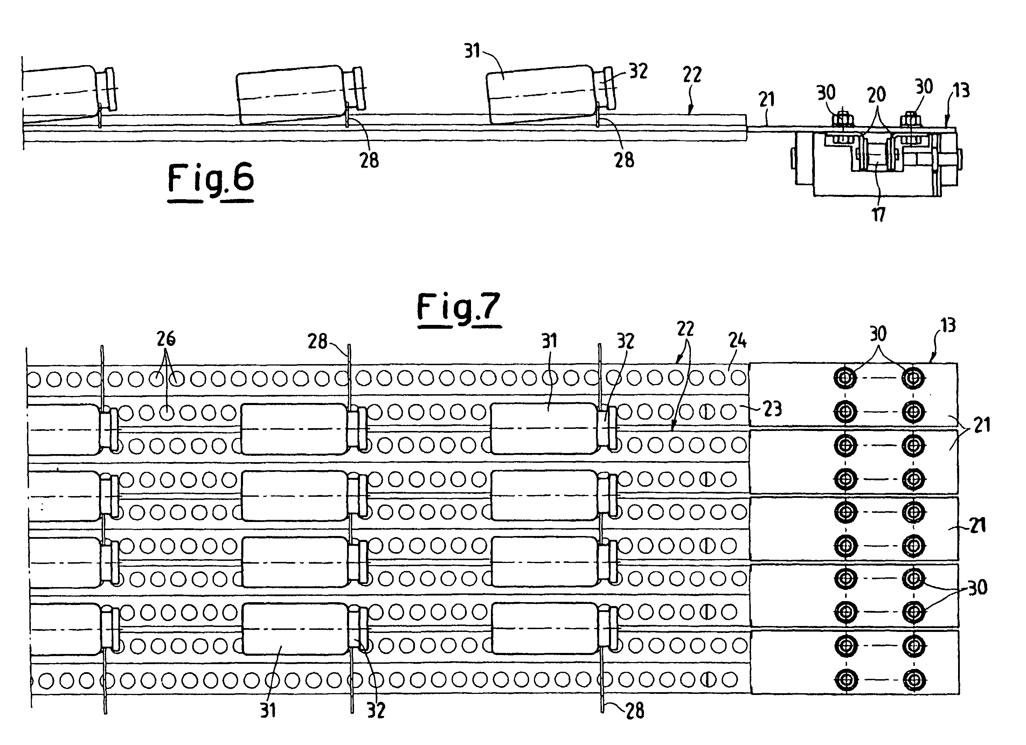

Figures 6 and 7 are respectively a front elevation view and a top plan view of a portion of the conveyor of the furnace 11 according to the present invention which receives a first type of container, for example a substantially cylindrical container 31, with an upper annular recess 32 which is seated in one of the two seats 29 of a flat support 28.

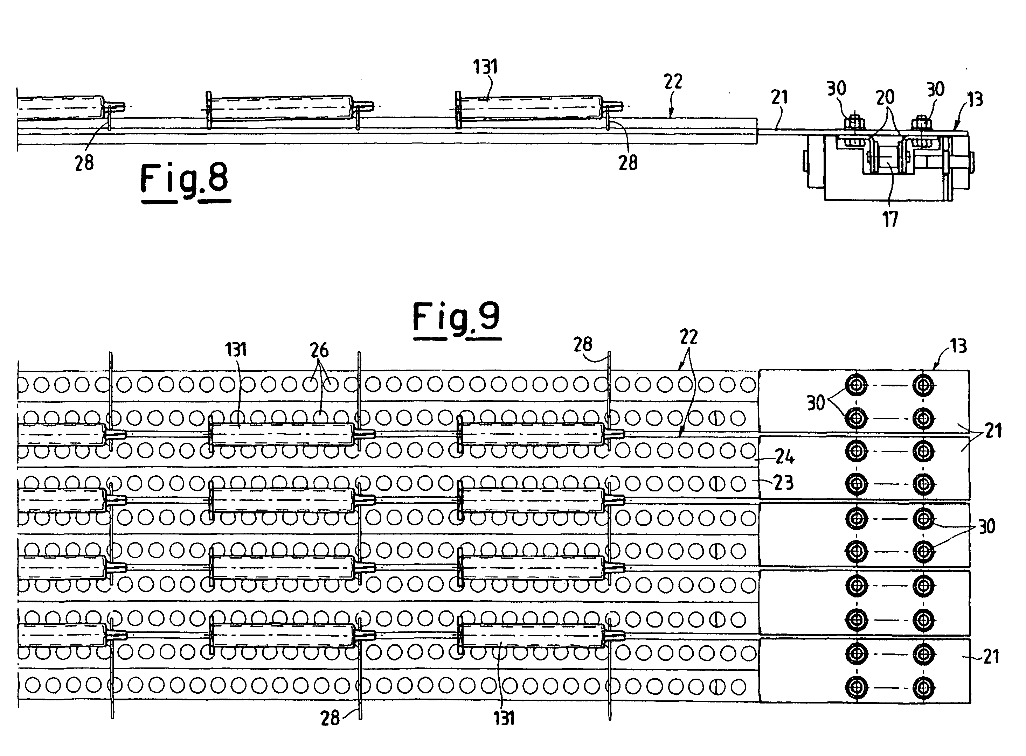

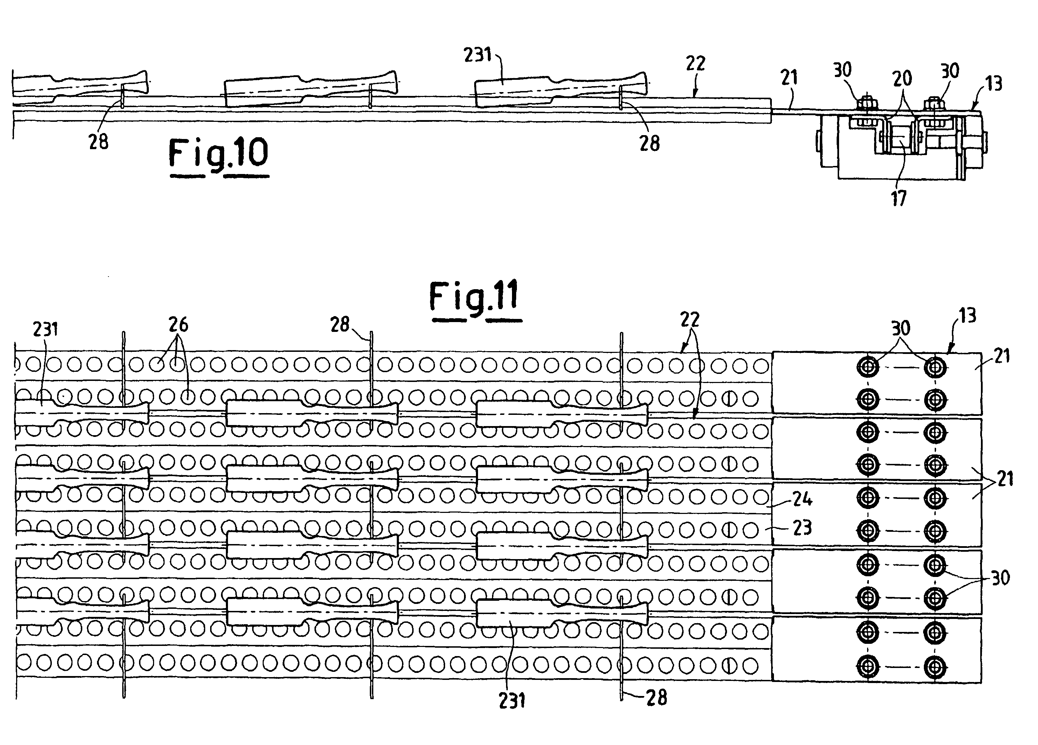

This thus ensures a high degree of stability of the containers during transportation, which also facilitates the operation where they are gripped by the end handling device, once they have been treated inside the furnace. The same comment may also be made for the other types of container, as shown in Figures 8 and 9. These figures show containers 131 with a syringe shape which are stably seated owing to the presence of the flat supports or supporting fins 28 with associated seats 29. The flanged end part of the syringe is seated between sides 23 and 24 of successive cross-pieces, while the initial narrow tubular portion is arranged on the supports 28. From yet another example illustrated in Figures 10 and 11, which demonstrates the versatility of the furnace and the conveyor formed in it, it is possible to see how the flat supports 28 are able to receive also containers 231 which are in the form of a phial or the like.

Precisely the presence of the flat supports or supporting fins 28 with associated seats 29 ensures the stable positioning of the containers 31, 131, 231 etc., of any shape, inside the furnace during the treatment stage. As a result of these supports 28 it is also possible to eliminate any contact with the surfaces of the containers which, if they have printed surfaces, could result in deterioration of the print.

Owing to the supporting arrangement of the cross-pieces 22, which are mounted on opposite brackets 21 of opposite and parallel chains 17, the parts are able to slide relative to one another and the deformations may be absorbed. The cross-pieces 22 which are provided with holes 26 do not absorb a large quantity of thermal energy and improve the overall performance of the furnace.

Precisely as a result of the composition based on cross-pieces 22, the furnace may also be provided with a modular design and may be easily made in the sizes requested by the client, in accordance with their requirements.

It is even possible, as a result of the rapid positioning of the fins or supports 28, to convey and treat in the furnace, without any problems, containers with the most widely varying shapes.

## Claims

1. Furnace for the continuous heat treatment of glass containers, comprising a structure (12) provided with a conveyor (13) which is designed to receive containers (31, 131, 231) and which is made to advance through a hot zone (14) and a ventilated zone (15), **characterized in that** said conveyor (13) comprises a pair of chains (17) which are located on opposite sides of the structure (12) and which are wound in an endless loop onto toothed end pulleys (18) so as to define an upper conveying section and a lower return section, said conveyor (13) also comprising a plurality of brackets (21), opposite brackets (21) being fixed to underlying links of said opposite chains (17) in a cantilevered manner and being directed inwards towards the opposite parallel and adjacent chain (17), said opposite brackets having, mounted on them, cross-pieces (22) provided with a plurality of supports (28) on which at least a portion of said containers may rest.

2. Furnace according to Claim 1, **characterized in that** said cross-pieces (22) and said brackets (21) are translatable with respect to one another, without disengagement.

3. Furnace according to Claim 1, **characterized in that** said cross-pieces (22) are formed by means of shaped profiles with a triangular cross-section, which have two inclined sides (23, 24) located on top and a third side (25a, 25b) located underneath said brackets (21).

4. Furnace according to Claim 3, **characterized in that** said third side (25a, 25b) located underneath said brackets (21) is centrally open and separated into two portions integral with the respective upper sides (23, 24).

5. Furnace according to Claim 4, **characterized in that** said two portions (25a, 25b) are inclined with respect to said brackets and converge at their free ends.

6. Furnace according to Claim 1, **characterized in that** said cross-pieces (22) have a series of holes (26).

7. Furnace according to Claim 1, **characterized in that** said supports (28) are provided at the top with seats (29) for receiving a part of at least one of said containers (31, 131, 231).

8. Furnace according to Claim 1, **characterized in that** said supports (28) each consist of a flat fin positioned perpendicularly with respect to a conveying surface.

9. Furnace according to Claim 1, **characterized in that** said conveyor (13) is of the modular type.

## Patentansprüche

1. Ofen für die kontinuierliche Wärmebehandlung von Glascontainern, umfassend eine Struktur (12), die mit einem Förderer (13) ausgestattet ist, der zum Aufnehmen von Containern (31, 131, 231) ausgestaltet ist und der geschaffen ist um sich durch eins heiße Zone (14) und eins belüftete Zone (15) vorwärts zu bewegen, **dadurch gekennzeichnet, daß** der Förderer (13) ein Paar von Ketten (17) umfaßt, die an gegenüberliegenden Seiten der Struktur (12) gelegen sind und die in einer Endlosschleife auf gezahnte Endscheiben (18) gewickelt sind, um einen oberen Förderbereich und einen unteren Rückführbereich zu definieren, wobei der Förderer (13) außerdem eins Vielzahl von Tragarmen (21) aufweist, wobei gegenüberliegende Tragarme (21) an darunterliegenden Verbindungsstükken der gegenüberliegenden Ketten (17) fixiert sind in freitragender Art und einwärts gerichtet sind in Richtung der gegenüberliegenden, parallelen und benachbarten Kette (17), wobei die gegenüberliegenden Tragarme auf ihnen montierte Querträger (22) aufweisen, die mit einer Vielzahl von Stützen (28) ausgestattet sind, auf denen zumindest ein Bereich der Container aufsitzen kann.

2. Ofen nach Anspruch 1, **dadurch gekennzeichnet, daß** die Querträger (22) und die Tragarme (21) ohne außer Eingriff zu gelangen retativ zueinander verschiebbar sind.

3. Ofen nach Anspruch 1, **dadurch gekennzeichnet, daß** die Querträger (22) gestaltet sind mittels geformter Profile mit dreieckigem Querschnitt, die zwei geneigte Seiten (23, 24) oberhalb und eine dritte Seite (25a, 25b) unterhalb der Tragarme (21) aufweisen.

4. Ofen nach Anspruch 3, **dadurch gekennzeichnet, daß** die unterhalb der Tragarme (21) gelegene dritte Seite (25a, 25b) mittig geöffnet und in zwei Bereiche aufgeteilt ist, die mit den jeweiligen oberen Seiten (23, 24) ein Ganzes bilden.

5. Ofen nach Anspruch 4, **dadurch gekennzeichnet, daß** die beiden Bereiche (25a, 25b) bezogen auf die Tragarme geneigt sind und sich in ihren freien Enden einander annähern.

6. Ofen nach Anspruch 1, **dadurch gekennzeichnet, daß** die Querträger (22) eine Reihe von Löchern (26) aufweisen.

7. Ofen nach Anspruch 1, **dadurch gekennzeichnet, daß** die Stützen (28) oberseitig mit Auflagen (29) ausgestattet sind zur Aufnahme eines Teils von mindestens einem Container (31, 131, 231).

8. Ofen nach Anspruch 1, **dadurch gekennzeichnet, daß** die Stützen (28) jeweils aus einer flachen Rippe bestehen, die senkrecht zu einer Förderfläche positioniert ist.

9. Ofen nach Anspruch 1, **dadurch gekennzeichnet, daß** der Förderer (13) von der modularen Art ist.

## Revendications

1. Four pour le traitement thermique en continu de récipients en verre, comprenant une structure (12) munie d'un transporteur (13) qui est conçu pour recevoir des récipients (31, 131, 231) et pour traverser une zone chaude (14) et une zone ventilée (15), **caractérisé en ce que** ledit transporteur (13) comprend une paire de chaînes (17) qui sont situées sur des côtés opposés de la structure (12) et enroulées en une boucle sans fin sur des poulies de retour dentées (18) de façon à définir une section supérieure de transport et une section inférieure de retour, ledit transporteur (13) comprenant également une pluralité de supports de fixation (21), des supports de fixation (21) opposés étant fixés en porte-à-faux sur des maillons sous-jacents desdites chaînes (17) opposées et dirigés vers l'intérieur vers la chaîne (17) opposée adjacente et parallèle, lesdits supports de fixation opposés ayant des traverses (22) montées sur eux et munies d'une pluralité de supports (28), sur lesquels au moins une partie desdits récipients peut reposer.

2. Four selon la revendication 1, **caractérisé en ce que** lesdites traverses (22) et lesdits supports de fixation (21) peuvent effectuer une translation les uns par rapport aux autres sans être désaccouplés.

3. Four selon la revendication 1, **caractérisé en ce que** lesdites traverses (22) sont formées au moyen de profilés façonnés ayant une section transversale triangulaire, qui ont deux côtés (23, 24) inclinés situés en haut et un troisième côté (25a, 25b) situé sous lesdits supports de fixation (21).

4. Four selon la revendication 3, **caractérisé en ce que** ledit troisième côté (25a, 25b) situé sous lesdits supports de fixation (21 ) est ouvert au centre et divisé en deux parties intégrées aux côtés (23, 24) supérieurs respectifs.

5. Four selon la revendication 4, **caractérisé en ce que** lesdites deux parties (25a, 25b) sont inclinées par rapport aux dits supports de fixation et convergent au niveau de leurs extrémités libres.

6. Four selon la revendication 1, **caractérisé en ce que** lesdites traverses (22) comprennent une série de trous (26).

7. Four selon la revendication 1, **caractérisé en ce que** lesdits supports (28) sont pourvus en haut de sièges (29) destinés à recevoir une partie d'au moins l'un desdits récipients (31, 131, 231).

8. Four selon la revendication 1, **caractérisé en ce que** lesdits supports (28) se composent chacun d'une ailette plate positionnée perpendiculairement à une surface de transport.

9. Four selon la revendication 1, **caractérisé en ce que** ledit transporteur (13) est du type modulaire.
